Europäisches Patentamt

European Patent Office

Office européen des brevets

(19)

(11) Veröffentlichungsnummer: **0 212 300**
**A1**

(12)

# EUROPÄISCHE PATENTANMELDUNG

(21) Anmeldenummer: 86110098.0

(51) Int. Cl.⁴: **B60K 17/24**

(22) Anmeldetag: 23.07.86

(30) Priorität: 22.08.85 US 768980

(43) Veröffentlichungstag der Anmeldung:
04.03.87 Patentblatt 87/10

(84) Benannte Vertragsstaaten:
DE FR GB

(71) Anmelder: DEERE & COMPANY
1 John Deere Road
Moline Illinois 61265(US)

(72) Erfinder: Dobberpuhl, Dale Rudolph
809 Winter Street
Horicon Wisconsin 53032(US)
Erfinder: Stricker, David Keith
Route No. 1 Box 225
Juneau Wisconsin 53039(US)

(74) Vertreter: Sartorius, Peter et al
DEERE & COMPANY European Office, Patent
Department Postfach 503 Steubenstrasse
36-42
D-6800 Mannheim 1(DE)

(54) **Kraftfahrzeug.**

(57) Ein Gartenschlepper ist mit einem stufenlos einstellbaren, über eine Verbrennungskraftmaschine antreibbaren Zugmittelgetriebe ausgerüstet, dessen
beide Wellen gemeinsam über eine Tragplatte (109)
und ein Schwingungsisolierungselement (97) auf einem Rahmen des Gartenschleppers gelagert sind,
wobei die eine Welle (37) gegenüber der anderen
Welle (123) mittels Schraubenbolzen (135, 137) radial verstellbar ist. Auf diese Weise wird vermieden,
daß die von der Verbrennungskraftmaschine ausgehenden Schwingungen auf den Rahmen des Gartenschleppers übertragen werden und gleichzeitig sichergestellt, daß das Zugmittelgetriebe ohne weiteres eingestellt werden kann.

FIG. 3

# Kraftfahrzeug

Die Erfindung bezieht sich auf ein Kraftfahrzeug, insbesondere Kleingartenschlepper, mit auf einem Hauptrahmen angeordneter Verbrennungskraftmaschine, deren Ausgangswelle weitere Antriebswellen und/oder zumindest ein Zugmittelgetriebe antreibt.

Es ist bereits allgemein ein Kleingartenschlepper bekannt, der mit einem auf einem Hauptrahmen angeordneten Verbrennungsmotor ausgerüstet ist, der über ein Zugmittelgetriebe ein Schneidwerk und auch die Laufräder antreibt. Aufgrund des relativ geringen Bodenabstandes des Schleppers ist es nicht leicht, ein Zugmittelgetriebe optimal am Schlepper zu installieren. Darüber hinaus müssen beispielsweise die von dem Verbrennungsmotor bzw. insbesondere von dem Dieselmotor ausgehenden Schwingungen bzw. Stöße entsprechend absorbiert werden, so daß keine Beschädigungen an den einzelnen Antriebsorganen auftreten. Dies ist insbesondere dann schwierig, wenn das Zugmittelgetriebe sowie dessen einzelne Wellen relativ dicht nebeneinander im Kleingartenschlepper plaziert werden.

Demgegenüber liegt der Erfindung die Aufgabe zugrunde, die einzelnen Antriebsorgane, insbesondere das Zugmittelgetriebe, derart auszubilden und anzuordnen, daß auch die von der Verbrennungskraftmaschine ausgehenden Schwingungen auf einfache Weise absorbiert und die beim Zusammenbau der Getriebeteile auftretenden Toleranzen ausgeglichen werden können. Diese Aufgabe ist durch die im kennzeichnenden Teil des Anspruches 1 aufgeführten Merkmale gelöst. Durch die vorteilhafte Lagerung und Abstützung des Zugmittelgetriebes und deren getriebenen Teile lassen sich die von der Verbrennungskraftmaschine ausgehenden Schwingungen auf einfache Weise absorbieren, so daß an diesen Teilen keine Beschädigungen auftreten. Hierzu ist das Schwingungsisolierungselement zwischen einer Tragvorrichtung am Hauptrahmen und einer Abstützvorrichtung für eine Welle des Zugmittelgetriebes vorgesehen. Dabei kann die an dem Schwingungsisolierungselement angeschlossene Tragplatte auch gleichzeitig zur Aufnahme einer Stellvorrichtung dienen, so daß die Ausgangswelle bzw. zweite Welle des Zugmittelgetriebes gegenüber der ersten Welle des Zugmittelgetriebes radial verstellbar ist. Hierzu wird auf einfache Weise die Riemenspannung für das Zugmittelgetriebe optimal eingestellt, ohne daß dabei die Eingangswelle des Zugmittelgetriebes oder die daran angeschlossene Ausgangswelle des Verbrennungsmotors übermäßig belastet wird.

Ferner ist es vorteilhaft, daß die Ausgangswelle bzw. die an die Ausgangswelle angeschlossene erste Welle des Zugmittelgetriebes sich ebenfalls über eine gemeinsame Halterung und ein Schwingungsisolierungselement auf dem Hauptrahmen des Kleingartenschleppers bzw. des Kraftfahrzeuges abstützt. Die Abstützung ist dabei so gewählt, daß beide Wellen des Zugmittelgetriebes über das Schwingungsisolierungselement mit dem Hauptrahmen verbunden sind. Auf diese Weise können die von der Verbrennungskraftmaschine ausgehenden Schwingungen bzw. Stöße gut aufgefangen werden, so daß sie nicht auf den Hauptrahmen des Fahrzeuges übertragen werden. Da lediglich die zweite Welle des Zugmittelgetriebes über die Stellvorrichtung bzw. über die Schraubenbolzen verstellbar ist und die erste Welle drehbar, jedoch fest auf dem Rahmen unmittelbar abgestützt ist, werden auf die Ausgangswelle der Verbrennungskraftmaschine keine radialen Stellkräfte ausgeübt.

Die Verwendung des Schwingungsisolierungselementes und der Stellvorrichtung ermöglicht es, auch bei einem seitlichen Versatz der einzelnen Wellen untereinander bzw. der Kupplungsvorrichtungsteile einen Achsausgleich herbeizuführen, so daß die Herstellungstoleranzen zur Montage des Zugmittelgetriebes nicht so klein bemessen werden müssen.

Da die erste Welle des Zugmittelgetriebes, die mit der Ausgangswelle des Schleppers verbunden ist, in einer Buchse lagert, die sich über eine Halterung und/oder die Tragplatte und das Schwingungsisolierungselement auf dem Hauptrahmen des Kraftfahrzeuges bzw. des Kleinschleppers abstützt, können die von der Verbrennungskraftmaschine ausgehenden Schwingungen auf vorteilhafte Weise absorbiert werden, so daß diese auch nicht über die zweite Welle des Zugmittelgetriebes auf andere Getriebeteile gelangen. Eine einfache Verstellung der zweiten Welle des Zugmittelgetriebes wird auch dadurch erleichtert, daß in der Tragplatte eine Langlochöffnung vorgesehen ist, die eine Radialverstellung der zweiten Welle des Zugmittelgetriebes auf einfache Weise gestattet. Um eine ausreichende Spannung für das Zugmittel des Zugmittelgetriebes zu gewährleisten, sind zwischen den Schrauben der Stellvorrichtung und einem Flansch der Tragplatte Federelemente vorgesehen, die ständig die notwendige Zugmittelspannung aufrechterhalten. Da die Längsmittelachse des Schwingungsisolierungselementes die durch die beiden Wellen verlaufende Längsebene rechtwinklig schneidet, läßt sich auf einfache Weise ein seitlicher Versatz der zweiten Welle ohne weiteres ausgleichen.

Im folgenden wird die Erfindung anhand von lediglich einen Ausführungsweg darstellenden Zeichnungen näher erläutert. Es zeigt:

Fig. 1 eine Seitenansicht eines Gartenschleppers mit an der Stirnseite angeordneter Schneidwerksvorrichtung,

Fig. 2 einen Teillängsschnitt des Rahmens des Gartenschleppers, des Verbrennungsmotors und die quer verlaufende Getriebeachse sowie das zugehörige Antriebssystem,

Fig. 3 einen Endschnitt entlang der Linie 3 -3 der Kupplungsvorrichtung,

Fig. 4 einen Endschnitt entlang der Linie 4 -4 von Schwingungsisolierungselementen,

Fig. 5 einen Längsschnitt durch die Riemenscheibe der Antriebsvorrichtung.

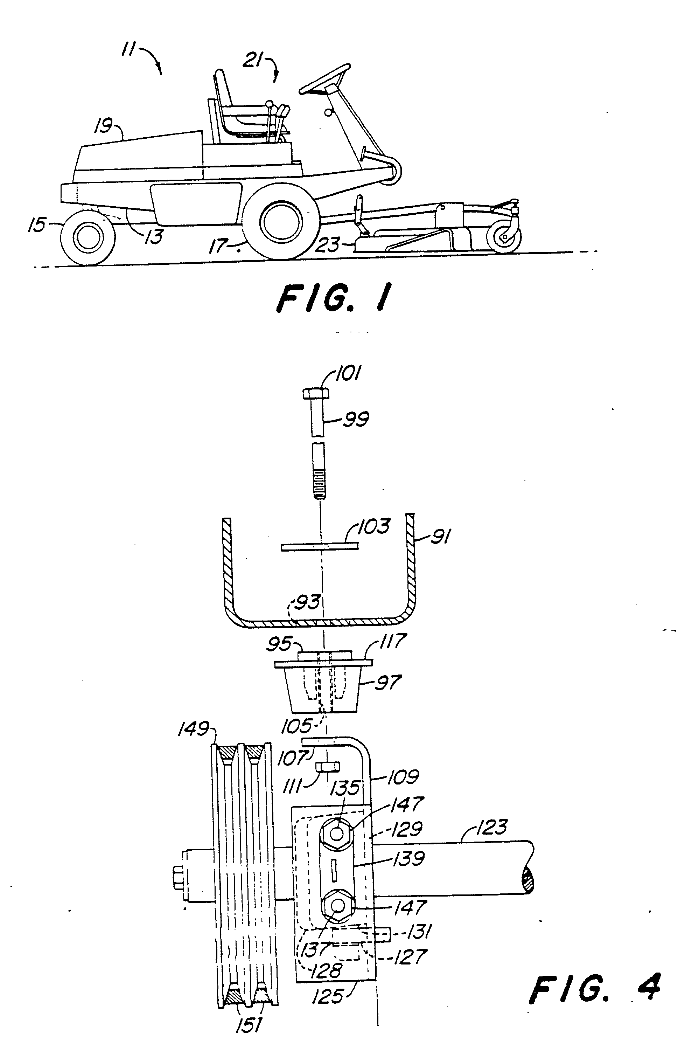

In der Zeichnung ist in Fig. 1 mit 11 ein Gartenschlepper bzw. ein Frontmähergartenschlepper bezeichnet (FM), der einen Hauptrahmen 13 mit vier Laufrädern 15 und 17 aufweist. Im hinteren Bereich des Gartenschleppers 11 befindet sich unterhalb einer Motorhaube 19 ein Dieselmotor 25. Die Motorhaube 19 erstreckt sich zwischen dem hinteren Ende des Hauptrahmens 13 und einem Fahrerstand bzw. einem Bedienungssitz 21. An der vorderen Seite des Gartenschleppers 11 ist ein Mähwerk 23 angeordnet, das über eine Kupplungsvorrichtung bzw. ein Gestänge mit dem Schlepper verbunden ist.

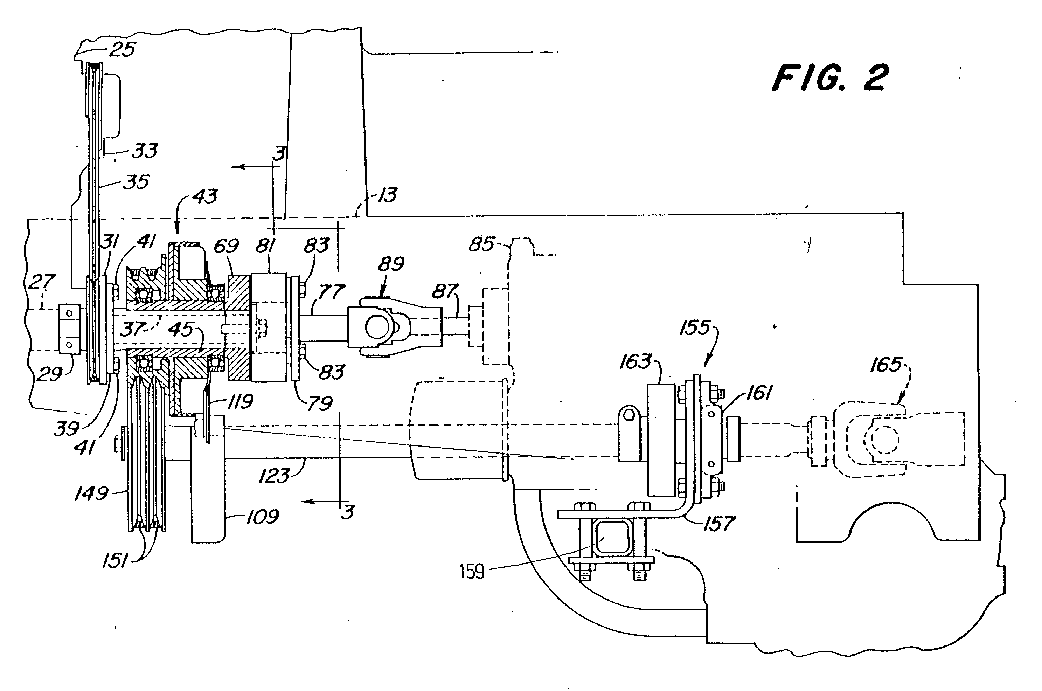

Wie aus Fig. 2 hervorgeht, ist die Verbrennungskraftmaschine bzw. der Dieselmotor 25 unterhalb der Motorhaube 19 mittels Schwingungsisolierungselementen auf dem Hauptrahmen 13 befestigt. Der Dieselmotor 25 weist eine Zapfwelle 27 auf, die mit der Kurbelwelle des Verbrennungsmotors verbunden und in Wälzlagern 29 drehbar aufgenommen ist. Die Zapfwelle 27 weist endseitig eine Keilriemenscheibe 31 für ein Zugmittelgetriebe auf. Die Keilriemenscheibe 31 steht über ein Zugmittel 35 mit einer Zugmittelscheibe 33 eines Ventilators bzw. Gebläses in Antriebsverbindung. Eine Drehmomentenwelle 37 ist mit einem Radialflansch 39 ausgestattet, der hierzu am Ende der Drehmomentenwelle 37 angeordnet ist. Der Radialflansch 39 ist über Schraubenbolzen 41 lösbar an die Keilriemenscheibe 31 angeschlossen, so daß sich die Drehmomentenwelle 37 koaxial zur Zapfwelle 27 erstreckt.

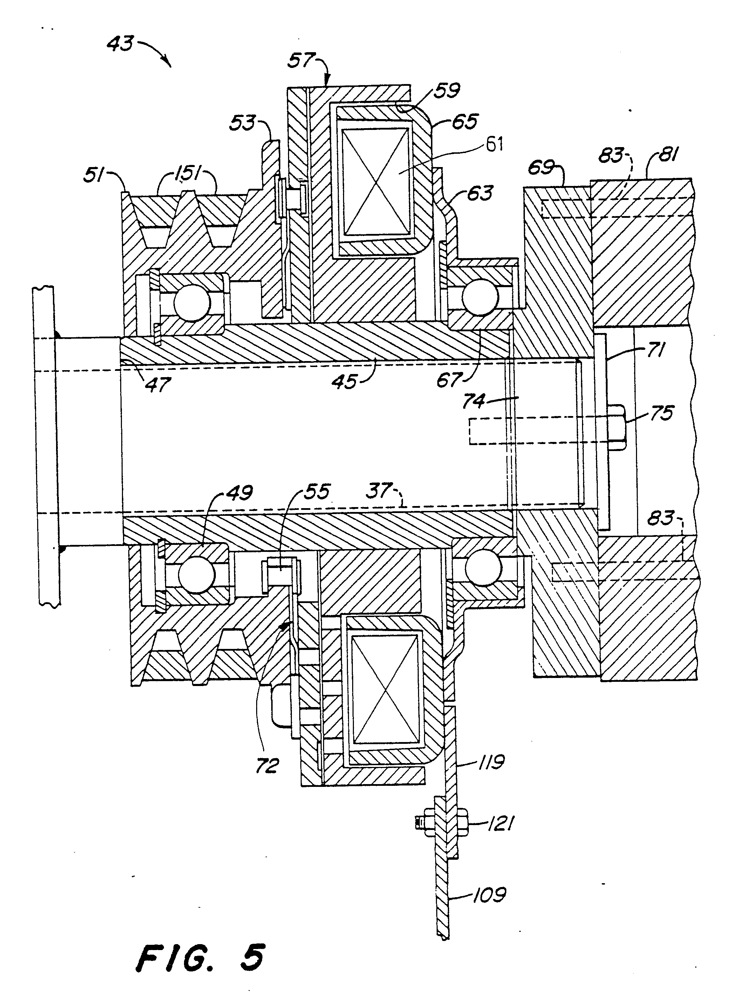

Wie aus den Figuren 2 und 5 hervorgeht, ist auf der Drehmomentenwelle 37 eine Kupplungseinrichtung 43 angeordnet. Auf der Drehmomentenwelle 37 ist mittels eines Preßsitzes eine Buchse 45 angeordnet, die mit ihrer linken Stirnseite gegen einen Flansch bzw. Kragen 47 der Drehmomentenwelle 37 anliegt. Ein erstes Wälzlager 49 ist im Bereich des linken Endes auf der Buchse 45 angeordnet und dient zur drehbaren Aufnahme einer Doppelriemenscheibe 51, die ebenfalls mittels eines Preßsitzes auf der Buchse 45 befestigt ist. An der rechten Stirnseite der Doppelriemenscheibe 51 befindet sich eine kreisrunde Ankerplatte 53, die eine begrenzte axiale Verstellung der Doppelriemenscheibe 51 entlang von Ankerbolzen 55 ermöglicht. Eine Ankerfeder 72 drückt die Doppelriemenscheibe 51 auf den Ankerbolzen 55 nach hinten. Auf der Buchse 45 sitzt ferner ein Ringkörper 57 mit einem ringförmigen Kanal 59, der zur Aufnahme einer in einem Gehäuse vorgesehenen elektrischen Spule 65 dient. Gegen das Gehäuse der Spule 65 liegt ein Flansch 63 an, der auf dem Außenring eines Wälzlagers 67 angeordnet ist. Das Wälzlager 67 ist ebenfalls auf der Buchse 45 befestigt. Auf dem vorderen bzw. rechten Ende der Drehmomentenwelle 37 ist ein Kupplungsflansch 69 mittels eines Preßsitzes befestigt. Ferner ist der Kupplungsflansch 69 mittels einer Ringscheibe 71 gesichert, die hierzu gegen die rechte Stirnfläche des Kupplungsflansches 69 anliegt und die mittels eines Schraubenbolzens 75 an der Drehmomentenwelle 37 befestigt ist.

Wie aus Fig. 2 hervorgeht, ist eine Antriebswelle 77 mit einem Flansch 79 ausgerüstet, der mittels Schraubenbolzen 83 und über eine Distanzscheibe 81 an den Kupplungsflansch 69 angeschraubt ist. Eine quer verlaufende, einstellbare Getriebeachse 85, die lediglich in gestrichelten Linien angedeutet ist, weist eine Eingangswelle 87 auf, die mit der Antriebswelle 77 über ein Kardangelenk 89 verbunden ist. Die Zapfwelle 27 des Verbrennungsmotors, die Drehmomentenwelle 37 und die Antriebswelle 77 sowie die Eingangswelle 87 sind im wesentlichen koaxial zueinander ausgerichtet. Das Kardangelenk 89 gestattet einen gewissen seitlichen Versatz bzw. ein Ausbiegen der Wellen 77 und 87, ohne dabei die Getriebeachse 85 zusätzlich zu beeinflussen.

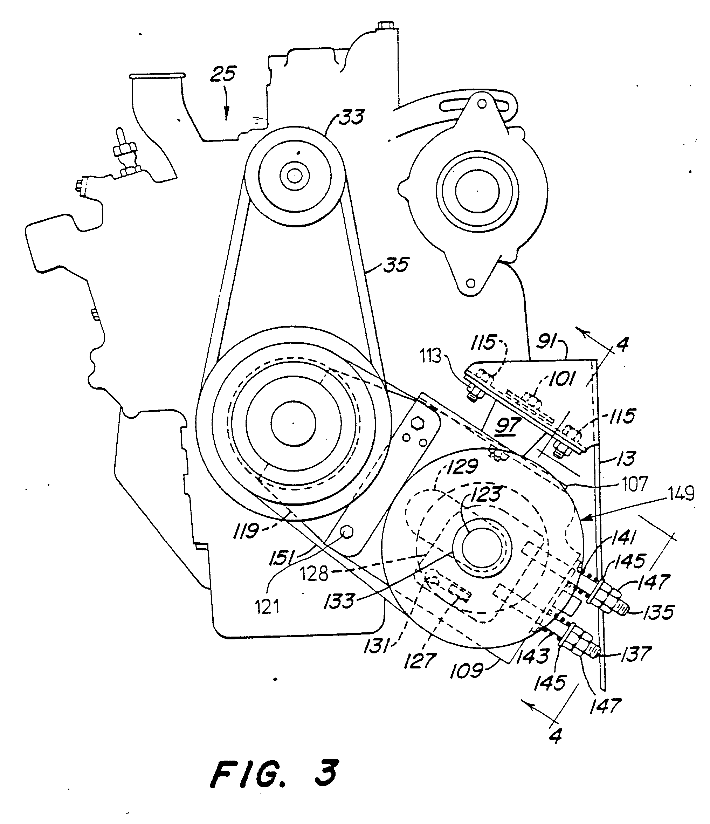

Wie aus den Figuren 3 und 4 hervorgeht, weist der Hauptrahmen 13 eine U-förmig ausgebildete Halterung 91 auf. Die Halterung 91 ist mit einer Bohrung 93 versehen, die koaxial zu einer in einem Schwingungsisolierungselement 97 vorgesehenen Bohrung 105 ausgerichtet werden kann. Das Schwingungsisolierungselement 97 besteht aus einem zylindrischen Flansch 95 mit einem sich daran anschließenden, im Durchmesser größeren Kragen 117, auf dem das Schwingungsisolierungselement 97 befestigt ist, das sich konisch verjüngt und beispielsweise aus einem elastischen Material bzw. Gummi hergestellt sein kann. Ein Schraubenbolzen 99 mit einem Schraubenkopf 101 wird durch die in einer Unterlagscheibe 103 vorgesehene Bohrung und durch die Bohrung 93 der U-förmigen Halterung 91 eingeführt und dann durch die im Schwingungsisolierungselement 97 vorgesehene Bohrung 105 und eine in einem Flansch 107 vorgesehene weitere Bohrung. Nach Einsetzen des Schraubenbolzens 99 in die erwähnten Bohrungen läßt sich dieser mittels einer Mutter 111 an dem Flansch 107 befestigen. Dabei legt sich die Unterlagscheibe 103, deren Durchmesser größer ist als der Durchmesser des Flansches 95 des Schwingungsisolierungselementes 97, gegen die eine Seite der Halterung 91 an, die dann die Unterseite der Halterung 91 gegen den Flansch 95 preßt. Der Kragen 117 ist mittels Schraubenbolzen 115 und Muttern 113 mit der U-Halterung 91 fest verbunden. Um sicherzustellen, daß die elektrische Spule 65 der Kupplung ihre gewünschte Lage beibehält, ist eine Halterung 119 mit dem Spulengehäuse fest verbunden (siehe Fig. 5). Die Halterung 119 ist ferner an eine Tragplatte 109 mittels Schraubenbolzen 121 lösbar angeschlossen.

Wie aus Fig. 3 hervorgeht, dient die Tragplatte 109 ferner zur Lagerung einer Welle 123. Zur Lagerung der Welle 123 sind ferner ein Flansch 125, ein Zapfen 127 sowie eine längliche Öffnung bzw. ein Schlitz 129 vorgesehen. Ein Gußteil 128 liegt gegen die Rückseite der Tragplatte 109 derart an, daß der Zapfen 127 der Tragplatte 109 in einer Nut 131 des Gußteiles 128 verschoben werden kann. Eine relativ kurze Gewindestange 135 ist verschiebbar in dem Flansch 125 der Tragplatte 109 aufgenommen und in den Gußteil 128 endseitig eingeschraubt. Eine zweite relativ kurze Gewindestange 137 ist ebenfalls in dem Flansch 125 verschiebbar aufgenommen und endseitig in dem Gußteil 128 eingeschraubt. Die beiden Gewindestangen 135 und 137 verlaufen parallel zueinander. Ein Anzeigeteil 139 zur Ermittlung der Zugmittelspannung des Zugmittelgetriebes liegt gegen den Flansch 125 derart an, daß die Gewindestangen 135 und 137 sich quer durch den Basisteil des Anzeigeteils 139 erstrecken. Auf den Gewindestangen 135 und 137 sind Federn 141 und 143 aufgebracht. Auf der Gewindestange 135 sind eine Unterlagscheibe 145 und eine Mutter 147 endseitig aufgebracht, so daß die Feder 141 entsprechend gespannt werden kann. Auf der Gewindestange 137 sitzen ebenfalls eine Unterlagscheibe 145 und eine Mutter 147, die die Feder 143 auf der Gewindestange 137 zusammendrücken. Die Welle 123 erstreckt sich durch die Öffnung bzw. den Schlitz 129 und ist in einem Lager 133 endseitig drehbar gelagert. Die Nut 131, der Schlitz 129 sowie der Zapfen 127 sind so ausgerichtet, daß eine lineare Verstellung des Lagers 133 von einer Vorspannstellung in eine Normalstellung möglich ist, wobei der Stellweg mit Bezug auf die Welle 37 in radialer Richtung verläuft. Auf dem hinteren Ende der Welle 123 befindet sich eine Doppelkeilriemenscheibe 149, die zur Doppelriemenscheibe 51 (Fig. 5) ausgerichtet ist. Die beiden Doppelkeilriemenscheiben 51 und 149 sind über Zugmittelriemen 151 antriebsverbunden.

Wie aus Fig. 2 hervorgeht, ist die Welle 123 ferner in einer Lagervorrichtung 155 drehbar aufgenommen, zu der eine Winkelhalterung 157 gehört die mittels Schraubenbolzen auf einem Träger 159 befestigt ist. An der Halterung 157 ist ein Pendellager 161 fest angeschlossen, in dem das vordere Ende der Welle 123 drehbar aufgenommen ist. Die Welle 123 ist ferner mit einer Trommelbremse 163 ausgestattet, die mit einem in der Zeichnung nicht dargestellten Bremssystem der Zapfwelle zusammenwirkt. An das vordere Ende der Welle 123 ist ein Kardangelenk 165 angeschlossen.

Die Kupplung des Zugmittelgetriebes einschließlich der Doppelriemenscheibe 51 ist mit der Drehmomentenwelle 37 antriebsverbunden. Die Kupplungseinrichtung ist mittels der Halterung 119 an der Tragplatte 109 befestigt. Die Tragplatte 109 ist an dem Hauptrahmen 13 mittels der U-förmig ausgebildeten Halterung 91 und dem Schwingungsisolierungselement 97 angeschlossen. Das Schwingungsisolierungselement 97 gibt weit genug nach, so daß bei einem seitlichen Versatz der Antriebsvorrichtung gegenüber der Verbrennungskraftmaschine ein Ausgleich möglich ist. Der Gußteil 128, der zur drehbaren Aufnahme der Welle 123 dient, läßt sich um einen bestimmten Betrag mit Bezug auf die Drehmomentenwelle 37 ein wenig radial bewegen. Der seitliche Versatz bzw. die seitliche Bewegung des Gußteiles 128 wird durch den auf der Tragplatte 109 befestigten Zapfen 127 in der Nut 131 sowie durch die Federeinrichtungen 135 bis 141 und 137 bis 143 begrenzt. Es ist besonders vorteilhaft, daß die Lagerung bzw. Anordnung der Welle 123 mittels der Tragplatte 109 eine optimale Spannung für den Zugmittelriemen 151 zuläßt. Hierdurch wird auch vermieden, daß eine Vorspannung des Zugmittelriemens 151 auf die Kurbelwelle der Verbrennungskraftmaschine übertragen wird. Drehmomentenspannungen, die über die Zapfwelle 27 der Verbrennungskraftmaschine hervorgerufen werden, werden durch das Schwingungsisolierungselement 97 absorbiert, das so dimensioniert werden kann, daß auch die gewünschten Toleranzen beim Zusammenbau der einzelnen Teile ausgeglichen werden können.

## Ansprüche

1. Kraftfahrzeug, insbesondere Kleingartenschlepper (11), mit auf einem Hauptrahmen (13) angeordneter Verbrennungskraftmaschine (25), deren Ausgangswelle (27) weitere Antriebswellen -

(7, 87) und/oder zumindest ein Zugmittelgetriebe antreibt, dadurch gekennzeichnet, daß am Hauptrahmen (13) eine Halterung (91) angeordnet ist, die über ein Schwingungsisolierungselement eine Tragplatte (109) trägt, auf der zumindest eine Welle (123) gegenüber der anderen Welle (37) des Zugmittelgetriebes radial verstellbar gelagert ist.

2. Kraftfahrzeug nach Anspruch 1, dadurch gekennzeichnet, daß das Schwingungsisolierungselement (97) zwischen der Halterung (91) und der Tragplatte (109) angeordnet ist.

3. Kraftfahrzeug nach Anspruch 2, dadurch gekennzeichnet, daß das Schwingungsisolierungselement (97), die Halterung (91) und die Tragplatte (109) mit je einer untereinander fluchtenden Bohrung ausgestattet sind, in die ein Befestigungsbolzen (101) eingesetzt ist.

4. Kraftfahrzeug nach Anspruch 2, dadurch gekennzeichnet, daß die Tragplatte (109) aus zwei rechtwinklig zueinander verlaufenden Schenkeln gebildet ist und der eine Schenkel das Schwingungsisolierungselement (97) und der andere Schenkel ein Lagerelement (Gußteil 128) zur Aufnahme der Welle (123) trägt.

5. Kraftfahrzeug nach einem oder mehreren der vorherigen Ansprüche, dadurch gekennzeichnet, daß das Lagerelement mit Bezug auf die Welle (123) radial verstellbar auf der Tragplatte (109) bzw. auf einem rechtwinklig dazu angeordneten Flansch (125) der Tragplatte (109) angeordnet ist.

6. Kraftfahrzeug nach Anspruch 5, dadurch gekennzeichnet, daß das eine Ende der Welle (123) des Zugmittelgetriebes sich durch einen in der Tragplatte (109) vorgesehenen Schlitz bzw. eine Langlochöffnung (129) erstreckt.

7. Kraftfahrzeug nach einem oder mehreren der vorherigen Ansprüche, dadurch gekennzeichnet, daß die Welle (123) des Zugmittelgetriebes in einem Lager (133) aufgenommen ist, das an einem Lagerelement (128) befestigt ist, das über eine Stellvorrichtung mit dem Flansch (125) verbunden ist.

8. Kraftfahrzeug nach Anspruch 7, dadurch gekennzeichnet, daß die Stellvorrichtung aus mindestens einem Schraubenbolzen (135, 137) besteht, der einenends mit dem Lagerelement (128) und anderenends mit dem Flansch (125) der Tragplatte (109) verbunden ist.

9. Kraftfahrzeug nach Anspruch 7, dadurch gekennzeichnet, daß an der Tragplatte (109) ein sich in Richtung des Lagerelementes (128) bzw. der Längsachse der Welle (123) erstreckender Zapfen (127) angeordnet ist, der in eine im Lagerelement (128) vorgesehene Nut (131) eingreift und dort geführt ist.

10. Kraftfahrzeug nach Anspruch 8, dadurch gekennzeichnet, daß auf der Welle (123) des Zugmittelgetriebes eine Zugmittelscheibe (149) angeordnet ist, deren Zugmittelriemen (151) mittels der Stellvorrichtung spannbar ist, wobei die Welle (123) parallel zur Zapfwelle (27) bzw. zur Eingangswelle des Zugmittelgetriebes verläuft, die unverstellbar über eine Halterung (119) mittel-oder unmittelbar mit dem Rahmen (13) verbunden ist.

11. Kraftfahrzeug nach Anspruch 8 und 10, dadurch gekennzeichnet, daß ein außerhalb der Verbrennungskraftmaschine vorgesehenes Lager zur Aufnahme der Zapfwelle (27) der Verbrennungskraftmaschine bzw. eine daran ko axial angeschlossene erste Welle des Zugmittelgetriebes an der Halterung (119) befestigt ist, die über die Tragplatte (109) und das Schwingungsisolierungselement (97) mit dem Hauptrahmen (13) verbunden ist, und daß die dazu parallel verlaufende zweite Welle (123) gegenüber der ersten Welle radial verstellbar ist.

12. Kraftfahrzeug nach Anspruch 8, dadurch gekennzeichnet, daß zwischen dem Flansch (125) und einer einstellbaren Mutter (147) des Schraubenbolzens (135, 137) eine Feder (141, 143) vorgesehen ist.

13. Kraftfahrzeug nach Anspruch 1, dadurch gekennzeichnet, daß das Schwingungsisolierungselement (97) sich in Richtung der Tragplatte (109) konisch verjüngt und einenends über einen an dem Schwingungsisolierungselement (97) angeschlossenen Flansch (117) mit einer am Hauptrahmen (13) befestigten Halterung (91) und anderenends mit der Tragplatte (109) verbunden ist.

14. Kraftfahrzeug nach Anspruch 1, dadurch gekennzeichnet, daß die erste Welle (37) und die zweite Welle (123) des Zugmittelgetriebes gemeinsam über eine Tragplatte (109) und das Schwingungsisolierungselement (97) am Hauptrahmen (13) befestigt sind und nur die zweite Welle (123) gegenüber der ersten Welle radial verstellbar gelagert ist.

15. Kraftfahrzeug nach einem oder mehreren der vorherigen Ansprüche, dadurch gekennzeichnet, daß die Ausgangswelle (27) bzw. eine daran angeschlossene, als Drehmomentenwelle (37) ausgebildete erste Welle des Zugmittelgetriebes in einer Buchse (45) aufgenommen ist, die über eine Schaltkupplung (43) mit der auf der Ausgangswelle drehbar gelagerten Zugmittelscheibe (51) antriebsverbindbar ist, wobei zumindest Teile der Schaltkupplung und/oder die Ausgangswelle über ein Wälzlager (67) und eine Halterung (119) und/oder die Tragplatte (109) mit dem Schwingungsisolierungselement (97) verbunden sind.

16. Kraftfahrzeug nach einem oder mehreren der vorherigen Ansprüche, dadurch gekennzeichnet, daß die durch das Schwingungsisolierungselement (97) verlaufende Mittelachse eine durch die beiden Wellen (27, 37 und 123) des Zugmittelgetriebes verlaufende Mittelebene etwa in einem
rechten Winkel schneidet.

17. Kraftfahrzeug nach einem oder mehreren
der vorherigen Ansprüche, dadurch gekennzeichnet, daß der in der Tragplatte (109) vorgesehene Schlitz (129) bzw. die Langlochöffnung sowie die
Gewindestangen (135, 137) der Stellvorrichtung
sich in Richtung der Mittelebene bzw. radial zu der
Wellen (27, 37) erstrecken.

*FIG. 1*

*FIG. 4*

**FIG. 2**

0 212 300

FIG. 3

FIG. 5

| | EINSCHLÄGIGE DOKUMENTE | | EP 86110098.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE - A1 - 3 128 619 (FIAT AUTO SPA) <br> * Gesamt * | 1-4 | B 60 K 17/24 |
| A | DE - B1 - 2 366 160 (DR. ING. H.C. F. PORSCHE AG) <br> * Gesamt * | 1,2 | |
| A | DE - B2 - 2 061 625 (DAIMLER-BENZ AG) <br> * Gesamt * | 1,2 | |
| A | EP - A1 - 0 025 848 (ALOIS PÖTTIN-GER OHG) <br> * Zusammenfassung; Fig. 1 * | 1 | |

| | RECHERCHIERTE SACHGEBIETE (Int. Cl.4) |
|---|---|
| | B 60 K <br> B 62 D <br> A 01 D |

Der vorliegende Recherchenbericht wurde für alle Patentansprüche erstellt.

| Recherchenort | Abschlußdatum der Recherche | Prüfer |
|---|---|---|
| WIEN | 19-11-1986 | DENK |